# EUROPÄISCHE PATENTSCHRIFT

(11) **EP 3 270 117 B1**
(45) Veröffentlichungstag und Bekanntmachung des Hinweises auf die Patenterteilung: **11.09.2019**
(21) Anmeldenummer: 17001174.6
(22) Anmeldetag: 10.07.2017
(51) Int. Cl.: G01D 9/00, G01D 11/24

(54) **DATENLOGGER**
DATA LOGGER
ENREGISTREUR DE DONNÉES

(30) Priorität: 15.07.2016 DE 102016008517
(43) Veröffentlichungstag der Anmeldung: 17.01.2018
(73) Patentinhaber: Testo SE & Co. KGaA, 79853 Lenzkirch (DE)
(72) Erfinder: Binder, Jörg, 79877 Friedenweiler (DE); Faisst, Tobias, 79100 Freiburg (DE)
(74) Vertreter: Börjes-Pestalozza, Henrich

(56) Entgegenhaltungen:
- EP-B1- 1 851 537
- DE-U1- 9 214 646
- GB-A- 2 494 208
- US-A1- 2011 170 249
- US-A1- 2013 264 918

## Beschreibung

Die Erfindung betrifft einen Datenlogger mit einem Elektronikteil und einem Batterieteil, wobei der Elektronikteil eine Sensorsignalverarbeitungseinrichtung und einen daran angeschlossenen Messsensor und der Batterieteil eine Batterie zur Versorgung zumindest der Sensorsignalverarbeitungseinrichtung aufweist, wobei der Elektronikteil in einem Elektronik-Gehäuseteil und der Batterieteil in einem Batterie-Gehäuseteil angeordnet ist.

Derartige Datenlogger sind bekannt und werden beispielsweise verwendet, um eine physikalische Messgröße in rauen Umgebungen über einen Zeitverlauf aufzunehmen.

Die US 2013/264918 A1 betrifft ein Gehäuse zur Einkapselung einer Energiequelle einer Sondenvorrichtung. Die Sondenvorrichtung weist zumindest eine Sonde auf, die zumindest einen Sensor zur Messung einer physikalischen oder chemischen Eigenschaft aufweist. Die Sondenvorrichtung weist ein Gehäuse aus einem ersten Gehäuseteil, in welchem die Elektronik angeordnet ist, und einem zweiten Gehäuseteil, in welchem die Energiequelle angeordnet ist, auf.

Bei derartigen Einsätzen besteht immer das Problem, dass der Datenlogger abgedichtet sein muss. Andererseits besteht der Wunsch, auf einfache Weise die Batterie auszutauschen, wenn sie leer ist.

Der Erfindung liegt daher die Aufgabe zugrunde, einen Datenlogger mit verbesserten Gebrauchseigenschaften bereitzustellen.

Zur Lösung der genannten Aufgabe sind erfindungsgemäß die Merkmale von Anspruch 1 vorgesehen. Somit wird zur Lösung der genannten Aufgabe erfindungsgemäß bei einem Datenlogger der eingangs beschriebenen Art vorgeschlagen, dass das Batterie-Gehäuseteil mit dem Elektronik-Gehäuseteil über eine Kupplung lösbar verbindbar ist, dass an der Kupplung ein Dichtmittel ausgebildet ist, durch welches ein Kontaktbereich mit Kontakten des Elektronikteils und korrespondierenden Gegenkontakten des Batterieteils in eingekuppeltem Zustand der Kupplung nach außen abgedichtet ist, und dass die Kontakte in entkuppeltem Zustand der Kupplung elektrisch von den korrespondierenden Gegenkontakten getrennt sind. Somit die Erfindung, einen Datenlogger zu schaffen, bei dem die Batterie leicht und insbesondere ohne Werkzeug auswechselbar ist und der gleichzeitig hohen Anforderungen an eine Abdichtung des Gehäuses genügen kann. Dies verbessert die Gebrauchseigenschaften deutlich.

Bei einer vorteilhaften Ausgestaltung ist vorgesehen, dass die Kupplung durch eine Relativbewegung des Elektronik-Gehäuseteils gegen das Batterie-Gehäuseteil einkuppelbar und/oder entkuppelbar ist. Somit ist eine einfache Verbindung und/oder Trennung von Elektronikteil und Batterieteil ermöglicht. Eine Kupplung ist mit möglichst geringem Platzbedarf quer zu einer Längsrichtung des Datenloggers ausbildbar.

Bei einer vorteilhaften Ausgestaltung ist vorgesehen, dass die Kupplung Führungsmittel hat, mit welchen die Relativbewegung definiert ist. Somit ist für den Benutzer eine ordnungsgemäße Einkupplung kontrollierbar, ohne dass eine Sichtkontrolle zwingend notwendig ist.

Bei einer vorteilhaften Ausgestaltung ist vorgesehen, dass die Relativbewegung eine Dreh-, Steck-, Schraub- oder Steck-Dreh-Bewegung ist. Somit sind einfach ausführbare Kupplungsbewegungen und Trennbewegungen realisierbar.

Bei einer vorteilhaften Ausgestaltung ist vorgesehen, dass die Kupplung in dem eingekuppelten Zustand gegen unbeabsichtigtes Öffnen gesichert ist. Somit ist der Batterieteil verliersicher an dem Elektronikteil befestigbar.

Bei einer vorteilhaften Ausgestaltung ist vorgesehen, dass die Kupplung einen Bajonettverschluss hat. Somit ist die Kupplung mechanisch sicherbar gegen unbeabsichtigtes Öffnen.

Bei einer vorteilhaften Ausgestaltung ist vorgesehen, dass die Kupplung als Magnetkupplung ausgebildet ist. Somit ist die Kupplung verschleißfrei gegen unbeabsichtigtes Öffnen sicherbar.

Bei einer vorteilhaften Ausgestaltung ist vorgesehen, dass die Kontakte und/oder die korrespondierenden Gegenkontakte derart symmetrisch ausgebildet sind, dass ein elektrischer Kontakt über einen Abschnitt der Relativbewegung und/oder in mehreren Orientierungen des Elektronik-Gehäuseteils zu dem Batterie-Gehäuseteil besteht. Somit ist ein elektrischer Kontakt auch bei unvollständigem Einkuppeln der Kupplung bereits herstellbar. Die Verbindbarkeit des Elektronik-Gehäuseteils mit dem Batterie-Gehäuseteil in mehreren Orientierungen hat den Vorteil, dass der Benutzer nicht - etwa durch eine aufwendige Sichtkontrolle - die richtige Orientierung zum Zusammenfügen der Gehäuseteile aufwendig suchen und kontrollieren muss.

Bei einer vorteilhaften Ausgestaltung ist vorgesehen, dass an dem Elektronik-Gehäuseteil eine Fühlerspitze ausgebildet ist, in welcher der wenigstens eine Messsensor angeordnet ist. Somit ist der Messsensor integral in dem Elektronik-Gehäuseteil aufnehmbar und gegebenenfalls mit dem Elektronik-Gehäuseteil kapselbar.

Bei einer vorteilhaften Ausgestaltung ist vorgesehen, dass der Messsensor ein Temperatursensor und/oder ein Drucksensor ist. Von Vorteil ist dabei, dass eine regelmäßige Temperaturüberwachung und/oder eine regelmäßige Drucküberwachung mit dem Datenlogger ausführbar ist.

Bei einer vorteilhaften Ausgestaltung ist vorgesehen, dass die Kontakte an einer Unterseite einer Leiterplatte angeordnet sind. Von Vorteil ist dabei, dass eine direkte Kontaktierung der Leiterplatte, welche die Sensorsignalverarbeitungseinrichtung oder Teile davon trägt, möglich ist. Zusätzliche Verkabelungen sind so verzichtbar. Ferner bietet die Kontaktierung einer Leiterplatte, welche die Kontakte trägt, den Vorteil, dass die Kontaktierung beim Zusammenstecken oder Zusammenfügen einfach herstellbar ist. Besonders günstig ist es dabei, wenn die Sensorsignalverarbeitungseinrichtung an einer Oberseite der Leiterplatte angeordnet ist. Somit ist eine platz- und/oder materialsparende Ausgestaltung erreichbar. Vorzugsweise ist die Leiterplatte in das Elektronik-Gehäuseteil eingesetzt. Somit ist einfach erreichbar, dass die Leiterplatte beim Zusammensetzen der Kupplung kontaktierbar ist.

Bei einer vorteilhaften Ausgestaltung ist vorgesehen, dass die Batterie in dem Batterie-Gehäuseteil von außen unzugänglich gekapselt angeordnet ist. Somit ist ein separates Batterieteil ausbildbar, bei welchem die Batterie unabhängig vom Zustand der Kupplung geschützt angeordnet ist. Besonders günstig ist es dabei, wenn die Batterie durch ein Kupplungsteil der Kupplung gekapselt ist. Somit ist ein einfach herstellbares Batterieteil, bei dem die Batterie beispielsweise in das Batterie-Gehäuseteil einsetzbar und durch das Kupplungsteil verschließbar ist, schaffbar.

Bei einer vorteilhaften Ausgestaltung ist vorgesehen, dass das Elektronik-Gehäuseteil und das Batterie-Gehäuseteil in eingekuppeltem Zustand zumindest die Sensorsignälverarbeitungseinrichtung kapseln. Somit ist eine dichte Aufbewahrung der Sensorsignalverarbeitungseinrichtung in eigekuppeltem Zustand schaffbar.

Bei einer vorteilhaften Ausgestaltung ist vorgesehen, dass das Elektronik-Gehäuseteil aus Metall gefertigt ist. Somit ist ein robustes Gehäuseteil fertigbar.

Bei einer vorteilhaften Ausgestaltung ist vorgesehen, dass das Batterie-Gehäuseteil aus Kunststoff gefertigt ist. Somit ist das Batterieteil als Wegwerfteil kostengünstig herstellbar.

Bei einer vorteilhaften Ausgestaltung ist vorgesehen, dass das Dichtmittel einen Dichtring hat. Somit ist eine geometrisch einfache Schnittstelle ausbildbar, die mit geringem Aufwand abdichtbar ist. Die Verwendung eines ebenen Dichtrings ist besonders vorteilhaft bei den beschriebenen Relativbewegungen, die eine Steck- und/oder Dreh-Achse auszeichnen. Bevorzugt ist der Dichtring eben ausgebildet, verläuft als beispielsweise vollständig in einer Ebene. Die Ausbildung eines ebenen Dichtrings hat den Vorteil, dass eine Abdichtung in eingekuppeltem Zustand leicht erreichbar ist, wenn beispielsweise die Relativbewegung eine Dreh-, Steck-, oder Schraub-Bewegung ist oder allgemein eine Steckachse und/oder eine Drehachse auszeichnet. Beispielsweise ist der Dichtring ein O-Ring. Somit ist ein standardisierter Dichtring verwendbar. Ein O-Ring ist von Vorteil, um einerseits genügend Freiheit zum Ausführen der Relativbewegung beim Einkuppeln beziehungsweise Auskuppeln zur Verfügung zu stellen und andererseits eine geforderte Abdichtung zu erreichen.

Bei einer vorteilhaften Ausgestaltung ist vorgesehen, dass das Dichtmittel eine durch die Relativbewegung ausgezeichnete Richtung umschließt. Die durch die Relativbewegung ausgezeichnete Richtung kann beispielsweise eine Steckachse und/oder eine Drehachse sein. Besonders günstig ist es hier, wenn das Dichtmittel eben ausgebildet ist, also vollständig in einer Ebene verläuft.

Bei einer vorteilhaften Ausgestaltung ist vorgesehen, dass die Sensorsignalverarbeitungseinrichtung zu einer dauerhaften Abspeicherung einer Mehrzahl von zu vorbestimmten Zeitpunkten mit dem wenigstens einen Messensor aufgenommenen Messwerten in einem Speichermittel eingerichtet ist. Somit ist der Datenlogger in der Lage, über einen vorgegebenen Zeitraum zu vorbestimmten Zeitpunkten Messsignale aufzuzeichnen, sodass der Verlauf der gemessenen oder überwachten physikalischen Größe auslesbar ist.

Bei einer vorteilhaften Ausgestaltung ist vorgesehen, dass an dem Batterie-Gehäuseteil ein Kupplungsteil der Kupplung und an dem Elektronik-Gehäuseteil ein passendes Gegen-Kupplungsteil der Kupplung ausgebildet ist. Somit sind zusätzliche Teile zur Ausbildung der Kupplung verzichtbar. Die Kupplung ist somit einfach ausbildbar und einfach einkuppelbar beziehungsweise entkuppelbar. Hierbei ist es besonders günstig, wenn das Einkuppeln und Entkuppeln durch die bereits beschriebene Relativbewegung ausführbar ist.

Bei einer vorteilhaften Ausgestaltung ist vorgesehen, dass das Batterie-Gehäuseteil einstückig ausgebildet ist. Somit ist ein einfach herstellbares Gehäuseteil beschrieben. Besonders günstig ist es, wenn das Batterie-Gehäuseteil mit einer rotationssymmetrischen Grundform ausgebildet ist. Somit ist ein einstückiges Gehäuseteil einfach fertigbar. Ansatzpunkte für Verschmutzungsablagerungen sind so einfach vermeidbar. Beispielsweise kann das Batterie-Gehäuseteil eine zylindrische Grundform aufweisen.

Alternativ oder zusätzlich kann vorgesehen sein, dass das Elektronik-Gehäuseteil einstückig ausgebildet ist. Somit ist ein einfach herstellbares Gehäuseteil beschrieben. Besonders günstig ist es, wenn das Elektronik-Gehäuseteil mit einer rotationssymmetrischen Grundform ausgebildet ist. Somit ist ein einstückiges Gehäuseteil einfach fertigbar. Ansatzpunkte für Verschmutzungsablagerungen sind so einfach vermeidbar. Beispielsweise kann das Elektronik-Gehäuseteil eine zylindrische Grundform aufweisen.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder mit einzelnen oder mehreren Merkmalen des Ausführungsbeispiels.

Es zeigt in stark vereinfachten Schnittdarstellungen
- Fig. 1: einen erfindungsgemäßen Datenlogger, bei welchem der Elektronikteil von dem Batterieteil getrennt ist und
- Fig. 2: den Datenlogger gemäß Figur 1, wobei der Batterieteil in dem Elektronikteil eingekuppelt ist.

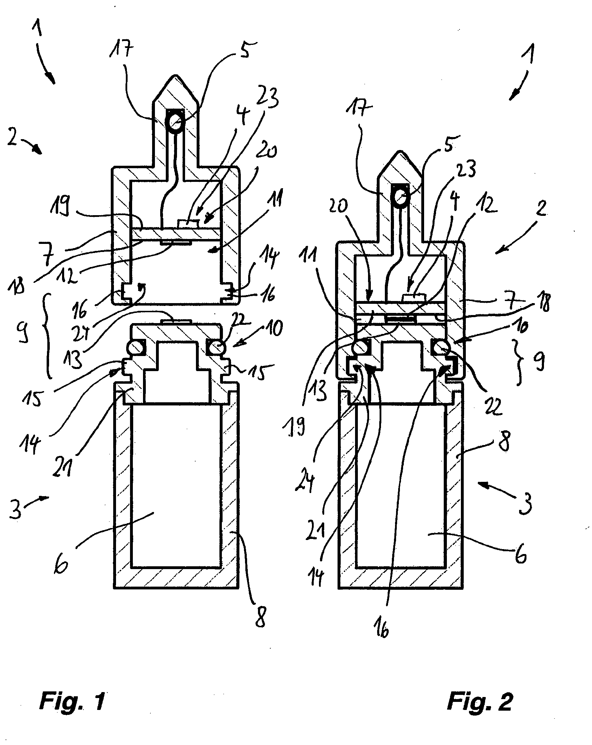

Die Figuren 1 und 2 zeigen jeweils Längsschnittdarstellungen eines erfindungsgemäßen Datenloggers 1. Die Figuren werden im Folgenden gemeinsam beschrieben. Bei der Darstellung wurde bewusst auf Details verzichtet, die für einen Fachmann zur Ausgestaltung eines Datenloggers bekannt sind. Die Figuren 1 und 2 zeigen daher nur die zur Erläuterung der Erfindung erforderlichen Einzelheiten in einer ansonsten stark vereinfachten Prinzipdarstellung.

Der erfindungsgemäße Datenlogger 1 hat einen Elektronikteil 2 und einen Batterieteil 3, die in Figur 1 voneinander getrennt und in Figur 2 miteinander verbunden sind.

In dem Elektronikteil 2 ist eine Sensorsignalverarbeitungseinrichtung 4 angeordnet, welche in an sich bekannter Weise zur Auswertung und Verarbeitung eines Sensorsignals von wenigstens Messsensor 5 eingerichtet ist.

Der Batterieteil 3 weist eine an sich bekannte Batterie 6 auf, mit welcher die Sensorsignalverarbeitungseinrichtung 4 versorgbar ist. Je nach Ausgestaltung des Messsensors 5 ist die Batterie auch zur Versorgung des Messsensors 5 verwendbar.

Der Elektronikteil 2 ist hierbei in einem Elektronik-Gehäuseteil 7 angeordnet, während der Batterieteil 3 in einem Batterie-Gehäuseteil 8 angeordnet ist.

An der Schnittstelle zwischen dem Elektronik-Gehäuseteil 7 und dem Batterie-Gehäuseteil 8 ist eine Kupplung 9 ausgebildet, mit welcher das Batterie-Gehäuseteil 8 mit Elektronik-Gehäuseteil 7 lösbar verbindbar ist. An der Kupplung 9 ist ein Dichtmittel 10 ausgebildet, welches in eingekuppeltem Zustand gemäß Figur 2 nach außen abdichtet.

In dem eingekuppelten Zustand gemäß Figur 2 schließen das Elektronik-Gehäuseteil 7 und das Batterie-Gehäuseteil 8 einen Kontaktbereich 11 ein, in dem Kontakte 12 des Elektronikteils 2 und Gegenkontakte 13 des Batterieteils 3 angeordnet sind.

Die Gegenkontakte 13 sind korrespondierend zu den Kontakten 12 ausgebildet, sodass in dem eingekuppelten Zustand gemäß Figur 2 eine elektrische Verbindung zwischen der Batterie 6 und der Sensorsignalverarbeitungseinrichtung 4 und gegebenenfalls dem Messsensor 5 hergestellt ist. Hierzu sind die Kontakte 12 mit der Sensorsignalverarbeitungseinrichtung 4 und gegebenenfalls dem Messsensor 5 verbunden, während die Gegenkontakte 13 mit der Batterie 6 verbunden sind.

Aus den Figuren 1 und 2 ist ersichtlich, dass in dem eingekuppelten Zustand gemäß Figur 2 der Kontaktbereich 11 nach außen durch das Dichtmittel 10 dicht abgeschlossen ist, während in entkuppeltem Zustand der Kupplung 9 die Kontakte 12 von den Gegenkontakten 13 elektrisch getrennt sind.

Die Kupplung des Elektronik-Gehäuseteils 7 mit dem Batterie-Gehäuseteil 8 erfolgt durch eine Relativbewegung der Gehäuseteile gegeneinander. Im vorliegenden Ausführungsbeispiel definiert die Kupplung 9 eine Bajonettkupplung, welche Führungsmittel 14 in Form eines Führungszapfens 15, der in eine entsprechende Führungsnut 16 eingreift, hat. Durch diese Führungsmittel 14 wird somit die Relativbewegung definiert, die im vorliegenden Fall eine Steck-Dreh-Bewegung ist.

In an sich von Bajonettverschlüssen bekannter Weise ist die Kupplung 9 somit in dem eingekuppelten Zustand gemäß Figur 2 gegen unbeabsichtigtes Öffnen mechanisch gesichert.

Bei einem weiteren Ausführungsbeispiel ist statt des Bajonettverschlusses oder zusätzlich zu diesem die Kupplung 9 als Magnetkupplung ausgebildet, um gegen unbeabsichtigtes Öffnen zu sichern.

Erfindungsgemäß sind die Kontakte 12 und die korrespondierenden Gegenkontakte 13 symmetrisch um eine Steck- und/oder Drehachse, die durch die Relativbewegung zum Kuppeln vorgegeben und ausgezeichnet ist, angeordnet. Hierdurch wird erreicht, dass die Kontaktierung in mehreren Orientierungen des Batterieteils 3 zu dem Elektronikteil 2 herstellbar ist.

An dem Elektronik-Gehäuseteil 7 ist an einem von der Kupplung 9 abgewandten Ende eine Fühlerspitze 17 ausgebildet, in welcher der wenigstens ein Messsensor 5 angeordnet ist. Der Messsensor kann hierbei einen Temperatursensor sein, was eine hermetische Abdichtung der Fühlerspitze 17 ermöglicht. Alternativ oder zusätzlich kann der wenigstens eine Messsensor 5 auch einen Drucksensor aufweisen, wobei in diesem Fall die Fühlerspitze 17 mit nicht weiter dargestellten Zugangsöffnungen zur Vermittlung des Außendrucks an den Drucksensor eingerichtet sein kann.

Die Kontakte 12 sind an der Unterseite 18 einer Leiterplatte 19 ausgebildet. Die Leiterplatte 19 trägt an ihrer Oberseite 20 und somit auch in entkuppeltem Zustand geschützt die Sensorsignalverarbeitungseinrichtung 4.

Die Batterie 6 ist in dem Batterie-Gehäuseteil 8 hermetisch abgeschlossen gekapselt. Hierbei weist die Kupplung 9 ein Kupplungsteil 21 auf, welches in das Batterie-Gehäuseteil 8 eingesetzt und mit diesem stoffschlüssig verbunden ist.

Das Batterie-Gehäuseteil 8 und Kupplungsteil 21 sind hierbei aus Kunststoff gefertigt, um eine stoffschlüssige Verbindung besonders einfach herstellen zu können. Das Batterieteil 3 ist somit als Wegwerfteil ausgebildet.

Das Elektronik-Gehäuseteil 7 ist mit der Fühlerspitze 17 einstückig aus Metall hergestellt, sodass entsprechende Robustheit bei Wiederverwendung erreichbar ist.

Das Dichtmittel 10 weist einen ebenen Dichtring 22 auf, der als O-Ring ausgebildet ist und somit in einer Ebene angeordnet ist.

Allgemein kann gesagt werden, dass der Datenlogger 1 zur Aufzeichnung von Messwerten des wenigstens einen Messsensors 5 in an sich bekannter Weise eingerichtet ist. Hierzu kann die Sensorsignalverarbeitungseinrichtung 4 in an sich bekannter Weise zu einer dauerhaften Abspeicherung einer Mehrzahl von zuvor bestimmten Zeitpunkten mit dem wenigstens einen Messsensor 5 aufgenommenen Messwerten in einem Speichermittel 23, das in der Sensorsignalverarbeitungseinrichtung 4 angeordnet oder ausgebildet sein kann, eingerichtet. An der Innenseite des Elektronik-Gehäuseteils 7 ist - insbesondere durch die Führungsnuten 16 - ein Gegenkupplungsteil 24 ausgebildet. Das Gegenkupplungsteil 24 ist einstückig an dem Elektronik-Gehäuseteil 7 ausgebildet und wirkt zur Bildung der Kupplung 9 mit dem Kupplungsteil 21 zusammen.

Bei dem Datenlogger 1 wird vorgeschlagen, ein Elektronik-Gehäuseteil 7, welches einen Elektronikteil 2 mit einer Sensorsignalverarbeitungseinrichtung 4 und wenigstens einem Messsensor 5 ausgebildet aufnimmt, mit einem Batterie-Gehäuseteil 8, welches eine Batterie 6 zur Versorgung der Sensorsignalverarbeitungseinrichtung 4 aufnimmt, lösbar zu kuppeln, wobei in eingekuppeltem Zustand eine elektrische Verbindung zwischen der Batterie 6 und der Sensorsignalverarbeitungseinrichtung 4 über Kontakte 12 und korrespondierende Gegenkontakte 13 hergestellt und in entkuppeltem Zustand getrennt, ist und wobei in eingekuppeltem Zustand ein Dichtmittel 10 an der Kupplung 9 die Kontakte 12 und die Gegenkontakte 13 nach außen schützt.
- 1: Datenlogger
- 2: Elektronikteil
- 3: Batterieteil
- 4: Sensorsignalverarbeitungseinrichtung
- 5: Messsensor
- 6: Batterie
- 7: Elektronik-Gehäuseteil
- 8: Batterie-Gehäuseteil
- 9: Kupplung
- 10: Dichtmittel
- 11: Kontaktbereich
- 12: Kontakte
- 13: Gegenkontakte
- 14: Führungsmittel
- 15: Führungszapfen
- 16: Führungsnut
- 17: Fühlerspitze
- 18: Unterseite
- 19: Leiterplatte
- 20: Oberseite
- 21: Kupplungsteil
- 22: Dichtring
- 23: Speichermittel
- 24: Gegenkupplungsteil

## Patentansprüche

1. Datenlogger (1) mit einem Elektronikteil (2), einem Batterieteil (3) und einem Kontaktbereich (11), wobei der Elektronikteil (2) eine Sensorsignalverarbeitungseinrichtung (4) und einen daran angeschlossenen Messsensor (5) und der Batterieteil (3) eine Batterie (6) zur Versorgung zumindest der Sensorsignalverarbeitungseinrichtung (4) aufweist, wobei der Elektronikteil (2) in einem Elektronik-Gehäuseteil (7) und der Batterieteil (3) in einem Batterie-Gehäuseteil (8) angeordnet ist, wobei das Batterie-Gehäuseteil (8) mit dem Elektronik-Gehäuseteil (7) über eine Kupplung (9) lösbar verbindbar ist, wobei an der Kupplung (9) ein Dichtmittel (10) ausgebildet ist, durch welches der Kontaktbereich (11) mit Kontakten (12) des Elektronikteils (2) und korrespondierenden Gegenkontakten (13) des Batterieteils (3) in eingekuppeltem Zustand der Kupplung (9) nach außen abgedichtet ist, und wobei die Kontakte (12) in entkuppeltem Zustand der Kupplung (9) elektrisch von den korrespondierenden Gegenkontakten (13) getrennt sind, **dadurch gekennzeichnet, dass** die Kontakte (12) und die korrespondierenden Gegenkontakte (13) symmetrisch um eine Steck- und/oder Drehachse, die durch die Relativbewegung zum Kuppeln vorgegeben und ausgezeichnet ist, angeordnet sind, wodurch erreicht wird, dass die Kontaktierung in mehreren Orientierungen des Batterieteils (3) zu dem Elektronikteil (2) herstellbar ist.

2. Datenlogger (1) nach Anspruch 1, **dadurch gekennzeichnet, dass** die Kupplung (9) durch eine Relativbewegung des Elektronik-Gehäuseteils (7) gegen das Batterie-Gehäuseteil (8) einkuppelbar und/oder entkuppelbar ist.

3. Datenlogger (1) nach einem der vorangehenden Ansprüche, **dadurch gekennzeichnet, dass** die Kupplung (9) Führungsmittel (14) hat, mit welchen die Relativbewegung definiert ist.

4. Datenlogger (1) nach einem der vorangehenden Ansprüche, **dadurch gekennzeichnet, dass** die Relativbewegung eine Dreh-, Steck-, Schraub- oder Steck-Dreh-Bewegung ist.

5. Datenlogger (1) nach einem der vorangehenden Ansprüche, **dadurch gekennzeichnet, dass** die Kupplung (9) in dem eingekuppelten Zustand gegen unbeabsichtigtes Öffnen gesichert ist, insbesondere wobei die Kupplung (9) einen Bajonettverschluss hat und/oder die Kupplung (9) als Magnetkupplung ausgebildet ist.

6. Datenlogger (1) nach einem der vorangehenden Ansprüche, **dadurch gekennzeichnet, dass** an dem Elektronik-Gehäuseteil (7) eine Fühlerspitze (17) ausgebildet ist, in welcher der wenigstens eine Messsensor (5) angeordnet ist und/oder dass der Messsensor (5) ein Temperatursensor und/oder ein Drucksensor ist.

7. Datenlogger (1) nach einem der vorangehenden Ansprüche, **dadurch gekennzeichnet, dass** die Kontakte (12) an einer Unterseite (18) einer vorzugsweise in das Elektronik-Gehäuseteil (7) eingesetzten Leiterplatte (19) angeordnet sind, insbesondere wobei die Sensorsignalverarbeitungseinrichtung (4) an einer Oberseite (20) der Leiterplatte (19) angeordnet ist.

8. Datenlogger (1) nach einem der vorangehenden Ansprüche, **dadurch gekennzeichnet, dass** die Batterie (6) in dem Batterie-Gehäuseteil (8), insbesondere durch ein Kupplungsteil (21) der Kupplung (9), von außen unzugänglich gekapselt angeordnet ist und/oder dass das Elektronik-Gehäuseteil (7) und das Batterie-Gehäuseteil (8) in eingekuppeltem Zustand zumindest die Sensorsignalverarbeitungseinrichtung (4) kapseln.

9. Datenlogger (1) nach einem der vorangehenden Ansprüche, **dadurch gekennzeichnet, dass** das Elektronik-Gehäuseteil (7) aus Metall gefertigt ist und/oder dass das Batterie-Gehäuseteil (8) aus Kunststoff gefertigt ist.

10. Datenlogger (1) nach einem der vorangehenden Ansprüche, **dadurch gekennzeichnet, dass** das Dichtmittel (10) einen vorzugsweise ebenen Dichtring (22), insbesondere einen O-Ring, hat und/oder dass das Dichtmittel (10) eine durch die Relativbewegung ausgezeichnete Richtung umschließt.

11. Datenlogger (1) nach einem der vorangehenden Ansprüche, **dadurch gekennzeichnet, dass** die Sensorsignalverarbeitungseinrichtung (4) zu einer dauerhaften Abspeicherung einer Mehrzahl von zu vorbestimmten Zeitpunkten mit dem wenigstens einen Messsensor (5) aufgenommenen Messwerten in einem Speichermittel (23) eingerichtet ist.

12. Datenlogger (1) nach einem der vorangehenden Ansprüche, **dadurch gekennzeichnet, dass** an dem Batterie-Gehäuseteil (8) das oder ein Kupplungsteil (21) der Kupplung (9) und an dem Elektronik-Gehäuseteil (7) ein passendes GegenKupplungsteil (24) der Kupplung (9) ausgebildet ist und/oder dass das Batterie-Gehäuseteil (8) und/oder das Elektronik-Gehäuseteil (7) einstückig ausgebildet ist/sind, insbesondere mit einer rotationssymmetrischen, vorzugsweise zylindrischen, Grundform.

## Claims

1. Data logger (1) having an electronic part (2), a battery part (3) and a contact region (11), wherein the electronic part (2) has a sensor signal-processing device (4) and a measuring sensor (5) connected thereto, and the battery part (3) has a battery (6) for supplying at least the sensor signal-processing device (4), wherein the electronic part (2) is arranged in an electronic housing part (7), and the battery part (3) is arranged in a battery housing part (8), wherein the battery housing part (8) can be detachably connected to the electronic housing part (7) via a coupling (9), wherein a sealing means (10) is formed on the coupling (9), by means of which sealing means (10) the contact region (11) is sealed with respect to the outside with contacts (12) of the electronic part (2) and corresponding mating contacts (13) of the battery part (3) in the coupled state of the coupling (9), and wherein in the uncoupled state of the coupling (9) the contacts (12) are electrically isolated from the corresponding mating contacts (13), **characterized in that** the contacts (12) and the corresponding mating contacts (13) are arranged symmetrically about a plug-in axis and/or rotational axis which is predefined and distinguished with respect to coupling by the relative movement, which ensures that the formation of contact can be established in a plurality of orientations of the battery part (3) with respect to the electronic part (2) .

2. Data logger (1) according to Claim 1, **characterized in that** the coupling (9) can be coupled and/or uncoupled by means of a relative movement of the electronic housing part (7) with respect to the battery housing part (8).

3. Data logger (1) according to one of the preceding claims, **characterized in that** the coupling (9) has guide means (14) with which the relative movement is defined.

4. Data logger (1) according to one of the preceding claims, **characterized in that** the relative movement is a turning movement, plug-in movement, screwing movement or plug-in and turning movement.

5. Data logger (1) according to one of the preceding claims, **characterized in that** in the coupled state the coupling (9) is secured against unintentional opening, in particular wherein the coupling (9) has a bayonet closure and/or the coupling (9) is embodied as a magnetic coupling.

6. Data logger (1) according to one of the preceding claims, **characterized in that** a sensor tip (17) is formed on the electronic housing part (7), in which sensor tip (17) the at least one measuring sensor (5) is arranged and/or **in that** the measuring sensor (5) is a temperature sensor and/or a pressure sensor.

7. Data logger (1) according to one of the preceding claims, **characterized in that** the contacts (12) are arranged on an underside (18) of a printed circuit board (19) which is preferably inserted into the electronic housing part (7), in particular wherein the sensor signal-processing device (4) is arranged on an upper side (20) of the printed circuit board (19) .

8. Data logger (1) according to one of the preceding claims, **characterized in that** the battery (6) is arranged in the battery housing part (8), in particular encapsulated by a coupling part (21) of the coupling (9) in such a way that it is inaccessible with respect to the outside, and/or **in that** in a coupled state the electronic housing part (7) and the battery housing part (8) at least encapsulate the sensor signal-processing device (4).

9. Data logger (1) according to one of the preceding claims, **characterized in that** the electronic housing part (7) is fabricated from metal, and/or **in that** the battery housing part (8) is fabricated from plastic.

10. Data logger (1) according to one of the preceding claims, **characterized in that** the sealing means (10) has a preferably planar sealing ring (22), in particular an O-ring, and/or **in that** the sealing means (10) surrounds a direction which is distinguished by the relative movement.

11. Data logger (1) according to one of the preceding claims, **characterized in that** the sensor signal-processing device (4) is configured to permanently store a multiplicity of measured values, recorded at predetermined times with the at least one measuring sensor (5), in a storage means (23).

12. Data logger (1) according to one of the preceding claims, **characterized in that** the or a coupling part (21) of the coupling (9) is formed on the battery housing part (8), and a matching mating coupling part (24) of the coupling (9) is formed on the electronic housing part (7), and/or **in that** the battery housing part (8) and/or the electronic housing part (7) are/is embodied in one piece, in particular with a rotationally symmetrical, preferably cylindrical, base shape.

## Revendications

1. Enregistreur de données (1) avec une partie électronique (2), une partie de batterie (3) et une région de contact (11), dans lequel la partie électronique (2) présente un dispositif de traitement de signal de capteur (4) et un capteur de mesure (5) relié au dit dispositif de traitement de signal de capteur (4) et la partie de batterie (3) présente une batterie (6) pour l'alimentation d'au moins un dispositif de traitement de signal de capteur (4), dans lequel la partie électronique (2) est disposée dans une partie de boîtier d'électronique (7) et la partie de batterie (3) est disposée dans une partie de boîtier de batterie (8), dans lequel la partie de boîtier de batterie (8) peut être assemblée de façon séparable à la partie de boîtier d'électronique (7) au moyen d'un couplage (9), dans lequel un moyen d'étanchéité (10) est formé sur le couplage (9), par lequel la région de contact (11) avec des contacts (12) de la partie électronique (2) et des contacts opposés correspondants (13) de la partie de batterie (3) est rendue étanche à l'égard de l'extérieur dans l'état couplé du couplage (9) et dans lequel les contacts (12) dans l'état découplé du couplage (9) sont électriquement séparés des contacts opposés correspondants (13), **caractérisé en ce que** les contacts (12) et les contacts opposés correspondants (13) sont disposés de façon symétrique autour d'un axe d'embrochage et/ou de rotation, qui est prédéterminé et défini par le mouvement relatif de couplage, permettant ainsi que la mise en contact puisse être réalisée dans différentes orientations de la partie de batterie (3) par rapport à la partie électronique (2).

2. Enregistreur de données (1) selon la revendication 1, **caractérisé en ce que** le couplage (9) peut être couplé et/ou découplé par un mouvement relatif de la partie de boîtier d'électronique (7) contre la partie de boîtier de batterie (8).

3. Enregistreur de données (1) selon l'une quelconque des revendications précédentes, **caractérisé en ce que** le couplage (9) comporte des moyens de guidage (14), avec lesquels le mouvement relatif est défini.

4. Enregistreur de données (1) selon l'une quelconque des revendications précédentes, **caractérisé en ce que** le mouvement relatif est un mouvement de rotation, d'embrochage, de vissage ou d'embrochage accompagné de rotation.

5. Enregistreur de données (1) selon l'une quelconque des revendications précédentes, **caractérisé en ce que** le couplage (9) dans l'état couplé est bloqué contre une ouverture imprévue, en particulier dans lequel le couplage (9) comporte un verrou à baïonnette et/ou le couplage (9) est formé par un couplage magnétique.

6. Enregistreur de données (1) selon l'une quelconque des revendications précédentes, **caractérisé en ce qu'**une pointe de palpeur (17) est formée sur la partie de boîtier d'électronique (7), dans laquelle est disposé au moins un capteur de mesure (5) et/ou **en ce que** le capteur de mesure (5) est un capteur de température et/ou un capteur de pression.

7. Enregistreur de données (1) selon l'une quelconque des revendications précédentes, **caractérisé en ce que** les contacts (12) sont disposés sur un côté inférieur (18) d'une plaquette de circuits imprimés (19) introduite de préférence dans la partie de boîtier d'électronique (7), en particulier dans lequel le dispositif de traitement de signal de capteur (4) est disposé sur un côté supérieur (20) de la plaquette de circuits imprimés (19).

8. Enregistreur de données (1) selon l'une quelconque des revendications précédentes, **caractérisé en ce que** la batterie (6) est disposée dans la partie de boîtier de batterie (8), en particulier sous forme encapsulée inaccessible de l'extérieur, en particulier par une partie de couplage (21) du couplage (9) et/ou la partie de boîtier d'électronique (7) et la partie de boîtier de batterie (8) dans l'état couplé encapsulent au moins le dispositif de traitement de signal de capteur (4).

9. Enregistreur de données (1) selon l'une quelconque des revendications précédentes, **caractérisé en ce que** la partie de boîtier d'électronique (7) est fabriquée en métal et/ou **en ce que** la partie de boîtier de batterie (8) est fabriquée en matière plastique.

10. Enregistreur de données (1) selon l'une quelconque des revendications précédentes, **caractérisé en ce que** le moyen d'étanchéité (10) comporte un anneau d'étanchéité de préférence plan (22), en particulier un joint torique, et/ou **en ce que** le moyen d'étanchéité (10) entoure une direction définie par le mouvement relatif.

11. Enregistreur de données (1) selon l'une quelconque des revendications précédentes, **caractérisé en ce que** le dispositif de traitement de signal de capteur (4) est configuré pour une mémorisation durable dans un moyen de mémoire (23) d'une multiplicité de valeurs de mesure enregistrées à des instants prédéterminés avec ledit au moins un capteur de mesure (5).

12. Enregistreur de données (1) selon l'une quelconque des revendications précédentes, **caractérisé en ce que** la ou une partie de couplage (21) du couplage (9) est formée sur la partie de boîtier de batterie (8) et une partie de couplage opposée ajustée (24) du couplage (9) est formée sur la partie de boîtier d'électronique (7) et/ou **en ce que** la partie de boîtier de batterie (8) et/ou la partie de boîtier d'électronique (7) est/sont formée(s) d'une seule pièce, en particulier avec une forme de base à symétrie de révolution, de préférence cylindrique.
